# FASCICULE DE BREVET EUROPEEN

(11) **EP 2 920 045 B1**
(45) Date de publication et mention de la délivrance du brevet: **02.01.2019**
(21) Numéro de dépôt: 13786674.5
(22) Date de dépôt: 07.11.2013
(51) Int. Cl.: B62D 25/14

(54) **VEHICULE AUTOMOBILE A MOTEUR ARRIERE COMPORTANT UN COMPARTIMENT AVANT OPTIMISE**
KRAFTFAHRZEUG MIT EINEM HINTEREN MOTORENRAUM UND EINEM OPTIMAL GESTALTET VORDEREN RAUM.
MOTOR VEHICLE HAVING A REAR ENGINE AND COMPRISING AN IMPROVED FRONT COMPARTMENT

(30) Priorité: 13.11.2012 FR 1260780
(43) Date de publication de la demande: 23.09.2015
(73) Titulaire: Renault S.A.S., 92100 Boulogne-Billancourt (FR)
(72) Inventeur: OLLIVER, Mathieu, F-75014 Paris (FR)
(86) Numéro de dépôt international: PCT/EP2013/073241
(87) Numéro de publication internationale: WO 2014/075986

(56) Documents cités:
- DE-A1-102010 002 569
- JP-A- H0 325 063
- JP-A- H0 632 250
- JP-A- H06 219 256

## Description

L'invention concerne un véhicule automobile.

L'invention concerne plus particulièrement un véhicule automobile qui comporte un compartiment arrière contenant un groupe motopropulseur du véhicule automobile, et un compartiment avant comprenant :
- une première zone disposée à droite pour un véhicule en conduite à droite ou disposée à gauche pour un véhicule en conduite à gauche, recevant au moins une colonne de direction, un servomoteur d'assistance de freinage et des tuyaux primaires rigides de frein, et
- une deuxième zone disposée d'un côté du véhicule opposé à ladite première zone, recevant au moins une batterie.

On connaît de nombreux exemples de véhicules de ce type.

Dans de tels véhicules à moteur arrière, le compartiment avant est généralement de dimensions réduites et n'a d'autre fonction que de constituer une zone d'absorption de chocs apte à dissiper l'énergie libérée lors d'un choc en écrasant ladite zone. Un tel véhicule est connu du document JP H06 219256.

Les éléments fonctionnels de tels véhicules sont par ailleurs répartis dans le véhicule sans réelle cohérence en fonction des zones laissées disponibles.

Ainsi, il est par exemple courant de rencontrer de tels véhicules dont des éléments tels que les organes de freinage sont agencés sous un plancher du véhicule, à des emplacements qui sont particulièrement exposés aux intempéries et/ou aux chocs avec des corps étrangers, ce qui est particulièrement nuisible à la fiabilité de tels organes et plus globalement à la sécurité du véhicule et de ses occupants.

Par ailleurs, l'implantation des différents éléments n'est pas optimisée en fonction du côté de conduite du véhicule.

En effet, conventionnellement, les véhicules présentant une direction à droite ont des éléments fonctionnels dont l'implantation est complètement différente de celle des éléments fonctionnels des véhicules avec direction à gauche. Or, l'implantation différenciée de tous les éléments soit interdit la production des deux types de véhicule sur une même chaine, soit entraîne des surcoûts de production importants.

Il importe donc de minimiser ces surcoûts en ayant deux types de véhicules à direction à gauche ou à droite comportant un maximum d'éléments dont la position est invariante.

A cet effet, l'invention propose un véhicule du type décrit précédemment comportant un nombre élevé d'éléments dont l'emplacement est optimisé.

Dans ce but, l'invention propose un véhicule automobile du type décrit précédemment, caractérisé en ce que le compartiment avant comprend une troisième zone qui est disposée entre la première et la deuxième zone, et qui reçoit au moins un bloc hydraulique de freinage, et des tuyaux secondaires rigides de frein.

Selon d'autres caractéristiques de l'invention :
- la troisième zone contient une crémaillère de direction de véhicule qui déborde dans la première et la deuxième zone pour être associée sélectivement à une direction implantée du véhicule implantée à droite ou bien à gauche,
- la première zone contient un circuit hydraulique d'embrayage et la deuxième zone contient un réservoir de liquide de lave-vitre,
- la crémaillère de direction porte un moteur d'assistance agencé du même côté que la colonne de direction du véhicule,
- la troisième zone contient un échangeur de refroidissement, des tuyaux de refroidissement, et un bocal de liquide de refroidissement,
- le bocal de liquide de refroidissement est agencé dans une partie centrale supérieure du compartiment avant,
- la troisième zone contient :
   - un boîtier de fusibles et de relais,
   - un câblage et une bague de traversée du tablier du véhicule,
- la troisième zone contient des éléments du système de chauffage et de climatisation du véhicule comportant au moins :
   - des premiers tuyaux de climatisation,
   - des deuxièmes tuyaux de liaison à un échangeur aérotherme,
- l'échangeur de refroidissement et les tuyaux de refroidissement sont agencés dans une partie avant du compartiment avant,
- le câblage et la bague de traversée du tablier du véhicule sont agencés dans une partie centrale du tablier du véhicule et ils sont surmontés par le boîtier de fusibles et de relais,
- le bloc hydraulique de freinage et les tuyaux secondaires rigides de frein sont agencés dans une partie centrale du compartiment avant.

D'autres caractéristiques et avantages de l'invention apparaîtront à la lecture de la description détaillée qui suit pour la compréhension de laquelle on se reportera aux dessins annexés dans lesquels :
- la figure 1 est une vue schématique en coupe d'un véhicule selon un état antérieur de la technique ;
- la figure 2 est une vue de dessus d'un compartiment avant d'un véhicule selon l'invention ;
- la figure 3 est une vue en bout d'un compartiment avant d'un véhicule à direction à droite selon l'invention ;
- la figure 4 est une vue en bout d'un compartiment avant d'un véhicule à direction à gauche selon l'invention.

Sur les figures des chiffres de référence identiques désignent des éléments identiques ou ayant des fonctions similaires.

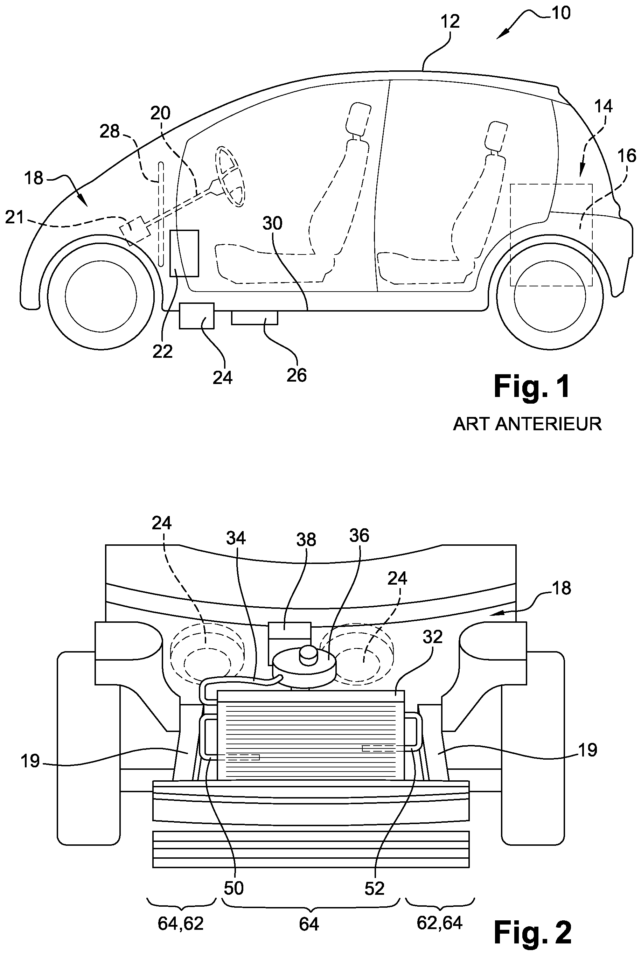

On a représenté à la figure 1 un véhicule automobile 10 réalisé selon un état antérieur de la technique.

Le véhicule 10 comprend un élément 12 de structure de caisse, qui comporte un compartiment arrière 14 et un compartiment avant 18. Le compartiment arrière 14 reçoit un groupe 16 motopropulseur du véhicule automobile et le compartiment avant 18 forme une zone d'absorption de chocs.

De manière connue le véhicule 10 reçoit différents éléments.

Comme l'illustre la figure 1 de manière simplifiée, le véhicule 10 reçoit des éléments d'un système de direction du véhicule, notamment une colonne de direction 20 et une crémaillère de direction 21 du véhicule, l'implantation de la colonne 20 dépendant notamment du type de conduite du véhicule, à droite pour un véhicule en conduite à droite ou à gauche une direction du véhicule implantée à gauche.

Le véhicule qui a été représenté sur la figure 1 comporte par ailleurs par exemple une batterie 22, un servomoteur 24 d'assistance de freinage et un bloc 26 hydraulique d'assistance de freinage, comportant par exemple de manière interne un dispositif de contrôle de trajectoire du véhicule ou ESP.

Comme on peut le voir sur la figure 1, la disposition de ces éléments n'est pas optimisée.

En particulier, la batterie 22 est par exemple située sensiblement derrière un tablier 28 du véhicule, et le servomoteur 24 d'assistance de freinage, ainsi que le bloc hydraulique de freinage 26 sont situés sous un plancher 30 du véhicule.

Cette configuration est particulièrement préjudiciable à la fiabilité desdits éléments puisque, notamment en ce qui concerne le servomoteur 24 et le bloc hydraulique de freinage 26, ceux-ci sont soumis aux aspersions d'eau provenant de la route, et peuvent, d'autre part, interférer avec des corps étrangers provenant eux aussi de la route.

Par ailleurs, dans le cadre d'une production de grande série, il importe de pouvoir produire sur la même chaîne de fabrication des véhicules 10 possédant une direction à droite ou une direction à gauche, tout en minimisant les coûts.

Or, dans la plupart des conceptions actuellement connues, l'implantation d'une direction à droite, ou d'une direction à gauche, entraîne un bouleversement général de l'implantation des éléments, de sorte qu'il n'est pas possible de bénéficier d'opérations de montage communes aux deux types de véhicule, qu'il est alors soit nécessaire de produire sur deux chaînes différentes soit de produire de manière quasiment unitaire et manuelle sur la même chaîne.

L'invention remédie à cet inconvénient en proposant, d'une part, une conception optimisée d'un véhicule 10 à moteur arrière dans laquelle les différents éléments sont regroupés sensiblement dans le compartiment avant et, d'autre part, dans laquelle la différenciation des éléments, selon qu'ils sont destinés aux véhicules à conduite à droite ou aux véhicules à conduite à gauche, est minimale.

Selon cette conception, comme l'illustrent les figures 2 à 4, le véhicule 10 reçoit aussi, dans son compartiment avant 18 délimité par deux longerons 19 une première zone 60 disposée à droite pour un véhicule en conduite à droite ou disposée à gauche pour un véhicule en conduite à gauche, recevant au moins une colonne 20 de direction, un servomoteur 24 d'assistance de freinage et des tuyaux primaires 44 rigides de frein.

La première zone 60 peut aussi contenir un circuit hydraulique d'embrayage 48.

D'un côté du véhicule opposé à ladite première zone 60, le véhicule 10 reçoit une deuxième zone 62 recevant au moins une batterie 22. La deuxième zone peut aussi contenir un réservoir 54 de liquide de lave-vitre.

Conformément à l'invention, le compartiment avant 18 comprend une troisième zone 64 qui est disposée entre la première zone 60 et la deuxième zone 62, et qui reçoit un grand nombre d'éléments qui peuvent être indifféremment montés aux mêmes emplacements dans le compartiment avant que le véhicule soit un véhicule en conduite à droite ou un véhicule en conduite à gauche.

Ainsi, conformément à l'invention la troisième zone comporte au moins un bloc 26 hydraulique de freinage, et des tuyaux secondaires 46 rigides de frein.

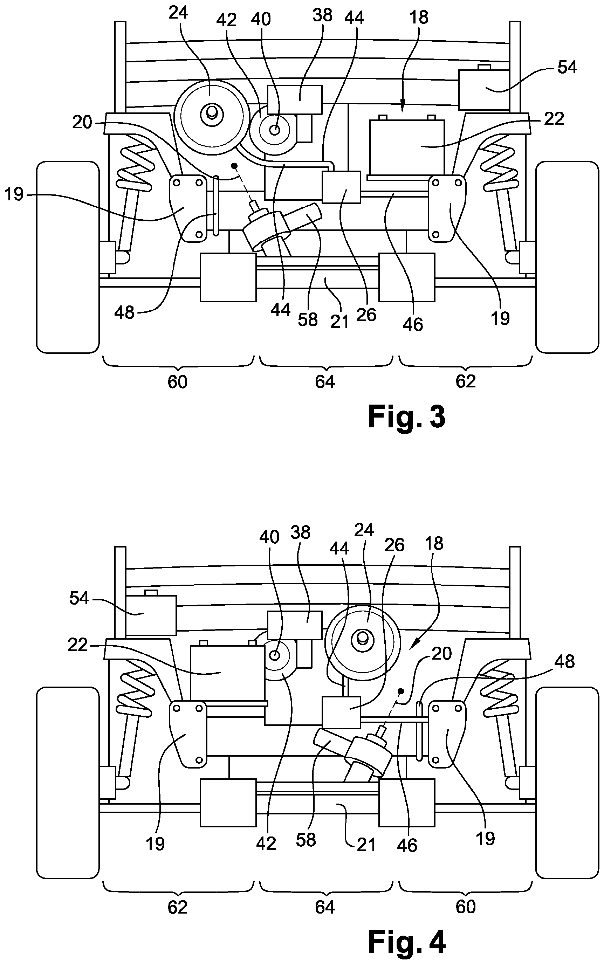

Comme l'illustrent les figures 3 et 4, le bloc hydraulique 26 de freinage et les tuyaux secondaires rigides 46 de frein sont agencés de préférence dans une partie centrale du compartiment avant.

La troisième zone contient par ailleurs une crémaillère 21 de direction de véhicule qui déborde dans la première zone 60 et la deuxième zone 62 et qui peut être associée sélectivement à une direction implantée du véhicule implantée à droite comme représenté à la figure 3 ou bien à gauche comme représenté à la figure 4.

Ainsi, la crémaillère 21 de direction porte un moteur 58 d'assistance qui est agencé dans la première zone du même côté que la colonne 20 de direction du véhicule.

La troisième zone 64 comporte aussi un échangeur 32 de refroidissement et des tuyaux 34 de refroidissement et un bocal 36 de liquide de refroidissement qui lui sont associés.

Comme l'illustre la figure 2, le bocal 36 de liquide de refroidissement est agencé dans une partie centrale supérieure du compartiment avant. Cette configuration lui permet d'être constamment accessible.

La troisième zone contient aussi des organes électriques que sont un boîtier 38 de fusibles et de relais, un câblage 40 et une bague 42 de traversée du tablier du véhicule.

Plus particulièrement, le câblage 40 et la bague 42 de traversée du tablier 28 du véhicule sont agencés dans une partie centrale du tablier 28 du véhicule et ils sont surmontés par le boîtier de fusibles et de relais.

La troisième zone contient des éléments du système de chauffage et de climatisation du véhicule, comportant au moins des premiers tuyaux 50 de climatisation et des deuxièmes tuyaux 52 de liaison à un échangeur aérotherme.

De préférence, comme l'illustre la figure 2, l'échangeur 32 de refroidissement et les tuyaux 34 de refroidissement sont agencés dans une partie avant du compartiment avant 18.

L'invention permet donc de regrouper les éléments essentiels au fonctionnement du véhicule dans une partie avant 18 du véhicule où ils sont à l'abri des intempéries.

La faible résistance mécanique de ces éléments ne nuit pas pour autant aux capacités d'écrasement de ladite partie avant 18 du véhicule 18 en cas de choc.

L'invention propose donc un agencement avantageux d'un véhicule à moteur arrière comportant un compartiment avant de dimension réduite.

## Revendications

1. Véhicule (10) automobile qui comporte un compartiment (14) arrière contenant un groupe (16) motopropulseur du véhicule automobile, et un compartiment avant (18) comprenant :
- une première zone (60) disposée à droite pour un véhicule en conduite à droite ou disposée à gauche pour un véhicule en conduite à gauche, recevant au moins une colonne (20) de direction, un servomoteur (24) d'assistance de freinage et des tuyaux primaires (44) rigides de frein, et
- une deuxième zone (62) disposée d'un côté du véhicule opposé à ladite première zone, recevant au moins une batterie (22),
**caractérisé en ce que** le compartiment avant (18) comprend une troisième zone (64) qui est disposée entre la première (60) et la deuxième zone (62), et qui reçoit au moins un bloc (26) hydraulique de freinage, et des tuyaux secondaires (46) rigides de frein.

2. Véhicule (10) selon la revendication 1, **caractérisé en ce que** la troisième zone contient une crémaillère (21) de direction de véhicule qui déborde dans la première et la deuxième zone (60, 62) pour être associée sélectivement à une direction implantée du véhicule implantée à droite ou bien à gauche.

3. Véhicule selon la revendication 1 ou 2, **caractérisé en ce que** la première zone (60) contient un circuit hydraulique d'embrayage (48) et **en ce que** la deuxième zone (62) contient un réservoir (54) de liquide de lave-vitre.

4. Véhicule selon l'une des revendications 2 ou 3, **caractérisé en ce que** la crémaillère (21) de direction porte un moteur (58) d'assistance agencé du même côté que la colonne (20) de direction du véhicule.

5. Véhicule selon l'une des revendications précédentes, **caractérisé en ce que** la troisième zone (64) contient un échangeur (32) de refroidissement, des tuyaux (34) de refroidissement, et un bocal (36) de liquide de refroidissement.

6. Véhicule selon la revendication précédente, **caractérisé en ce que** le bocal (36) de liquide de refroidissement est agencé dans une partie centrale supérieure du compartiment avant (18).

7. Véhicule selon l'une des revendications précédentes, **caractérisé en ce que** la troisième zone (64) contient :
- un boîtier (38) de fusibles et de relais,
- un câblage (40) et une bague (42) de traversée du tablier du véhicule.

8. Véhicule selon l'une des revendications précédentes, **caractérisé en ce que** la troisième zone (64) contient des éléments du système de chauffage et de climatisation du véhicule comportant au moins :
- des premiers tuyaux (50) de climatisation,
- des deuxièmes tuyaux (52) de liaison à un échangeur aérotherme.

9. Véhicule selon la revendication 5, **caractérisé en ce que** l'échangeur (32) de refroidissement et les tuyaux (34) de refroidissement sont agencés dans une partie avant du compartiment avant (18).

10. Véhicule selon la revendication 7, **caractérisé en ce que** le câblage (40) et la bague (42) de traversée du tablier (28) du véhicule sont agencés dans une partie centrale du tablier (28) du véhicule et **en ce qu'**ils sont surmontés par le boîtier (38) de fusibles et de relais.

11. Véhicule selon l'une des revendications précédentes, **caractérisé en ce que** le bloc hydraulique (26) de freinage et les tuyaux secondaires rigides (46) de frein sont agencés dans une partie centrale du compartiment avant.

## Patentansprüche

1. Kraftfahrzeug (10), das einen hinteren Raum (14), der eine Antriebseinheit (16) des Kraftfahrzeugs umfasst, und einen vorderen Raum (18) aufweist, der enthält:
- einen ersten Bereich (60), der bei einem rechtsgesteuerten Fahrzeug rechts oder bei einem linksgesteuerten Fahrzeug links angeordnet ist, der mindestens eine Lenksäule (20), einen Bremshilfe-Servomotor (24) und starre primäre Bremsleitungen (44) aufnimmt, und
- einen zweiten Bereich (62), der auf einer Seite des Fahrzeugs gegenüber dem ersten Bereich angeordnet ist, der mindestens eine Batterie (22) aufnimmt,
**dadurch gekennzeichnet, dass** der vordere Raum (18) einen dritten Bereich (64) enthält, der zwischen dem ersten (60) und dem zweiten Bereich (62) angeordnet ist und mindestens einen Brems-Hydraulikblock (26) und starre sekundäre Bremsleitungen (46) aufnimmt.

2. Fahrzeug (10) nach Anspruch 1, **dadurch gekennzeichnet, dass** der dritte Bereich eine Zahnstangenlenkung (21) des Fahrzeugs umfasst, die in den ersten und den zweiten Bereich (60, 62) übersteht, um selektiv einer eingebauten Lenkung des Fahrzeugs zugeordnet zu werden, die rechts oder auch links eingebaut ist.

3. Fahrzeug nach Anspruch 1 oder 2, **dadurch gekennzeichnet, dass** der erste Bereich (60) einen hydraulischen Kupplungskreislauf (48) umfasst, und dass der zweite Bereich (62) einen Behälter (54) mit Scheibenwaschflüssigkeit umfasst.

4. Fahrzeug nach einem der Ansprüche 2 oder 3, **dadurch gekennzeichnet, dass** die Zahnstangenlenkung (21) einen Hilfsmotor (58) trägt, der auf der gleichen Seite wie die Lenksäule (20) des Fahrzeugs angeordnet ist.

5. Fahrzeug nach einem der vorhergehenden Ansprüche, **dadurch gekennzeichnet, dass** der dritte Bereich (64) einen Kühltauscher (32), Kühlleitungen (34) und einen Behälter (36) mit Kühlflüssigkeit umfasst.

6. Fahrzeug nach dem vorhergehenden Anspruch, **dadurch gekennzeichnet, dass** der Kühlflüssigkeitsbehälter (36) in einem zentralen oberen Teil des vorderen Raums (18) angeordnet ist.

7. Fahrzeug nach einem der vorhergehenden Ansprüche, **dadurch gekennzeichnet, dass** der dritte Bereich (64) umfasst:
- ein Gehäuse (38) für Sicherungen und Relais,
- einen Kabelstrang (40) und einen Durchführungsring (42) der Spritzwand des Fahrzeugs.

8. Fahrzeug nach einem der vorhergehenden Ansprüche, **dadurch gekennzeichnet, dass** der dritte Bereich (64) Elemente der Heizungs- und Klimaanlage des Fahrzeugs umfasst, die mindestens aufweisen:
- erste Klimatisierungsleitungen (50),
- zweite Verbindungsleitungen (52) mit einem Lufterhitzer-Tauscher.

9. Fahrzeug nach Anspruch 5, **dadurch gekennzeichnet, dass** der Kühltauscher (32) und die Kühlleitungen (34) in einem vorderen Teil des vorderen Raums (18) angeordnet sind.

10. Fahrzeug nach Anspruch 7, **dadurch gekennzeichnet, dass** der Kabelstrang (40) und der Durchführungsring (42) der Spritzwand (28) des Fahrzeugs in einem zentralen Teil der Spritzwand (28) des Fahrzeugs angeordnet sind, und dass sie vom Gehäuse (38) für Sicherungen und Relais überlagert werden.

11. Fahrzeug nach einem der vorhergehenden Ansprüche, **dadurch gekennzeichnet, dass** der Brems-Hydraulikblock (26) und die starren sekundären Bremsleitungen (46) in einem zentralen Teil des vorderen Raums angeordnet sind.

## Claims

1. Motor vehicle (10) which comprises a rear compartment (14) containing a drivetrain (16) of the motor vehicle, and a front compartment (18) comprising:
- a first zone (60) arranged on the right for a righthand drive vehicle or arranged on the left for a lefthand drive vehicle, receiving at least one steering column (20), a braking assistance servomotor (24) and primary rigid brake pipes (44), and
- a second zone (62) arranged on the opposite side of the vehicle to said first zone, receiving at least one battery (22),
**characterized in that** the front compartment (18) comprises a third zone (64) which is arranged between the first (60) and second (62) zones, and which receives at least one braking hydraulic block (26), and secondary rigid brake pipes (46).

2. Vehicle (10) according to Claim 1, **characterized in that** the third zone contains a vehicle steering rack (21) which extends into the first and the second zones (60, 62) so as to be associated, selectively, with an installed steering of the vehicle, installed on the left or on the right.

3. Vehicle according to Claim 1 or 2, **characterized in that** the first zone (60) contains a clutch hydraulic circuit (48) and **in that** the second zone (62) contains a reservoir (54) for windshield washer fluid.

4. Vehicle according to either of Claims 2 and 3, **characterized in that** the steering rack (21) bears an assistance motor (58) arranged on the same side as the steering column (20) of the vehicle.

5. Vehicle according to one of the preceding claims, **characterized in that** the third zone (64) contains a cooling exchanger (32), cooling pipes (34) and a container (36) of coolant.

6. Vehicle according to the preceding claim, **characterized in that** the container (36) of coolant is arranged in an upper central part of the front compartment (18).

7. Vehicle according to one of the preceding claims, **characterized in that** the third zone (64) contains:
- a fuse and relay box (38),
- a wiring loom (40) and a grommet (42) for passing through the firewall of the vehicle.

8. Vehicle according to one of the preceding claims, **characterized in that** the third zone (64) contains elements of the heating and air conditioning system of the vehicle, comprising at least:
- first air conditioning pipes (50),
- second pipes (52) for connecting to an air heat exchanger.

9. Vehicle according to Claim 5, **characterized in that** the cooling exchanger (32) and the cooling pipes (34) are arranged in a front part of the front compartment (18).

10. Vehicle according to Claim 7, **characterized in that** the wiring loom (40) and the grommet (42) for passing through the firewall (28) of the vehicle are arranged in a central part of the firewall (28) of the vehicle and **in that** the fuse and relay box (38) is mounted over them.

11. Vehicle according to one of the preceding claims, **characterized in that** the hydraulic braking block (26) and the rigid secondary brake pipes (46) are arranged in a central part of the front compartment.
